**Europäisches Patentamt**

**European Patent Office**

**Office européen des brevets**

(11) Veröffentlichungsnummer: **0 093 298**
**B1**

(12) **EUROPÄISCHE PATENTSCHRIFT**

(45) Veröffentlichungstag der Patentschrift:
**03.09.86**

(51) Int. Cl.⁴: **G 01 B 5/30, G 21 C 17/00**

(21) Anmeldenummer: **83103685.0**

(22) Anmeldetag: **15.04.83**

(54) Verfahren und Vorrichtung zur Verformungsüberwachung eines Rohrbogens.

(30) Priorität: **29.04.82 DE 3216035**

(43) Veröffentlichungstag der Anmeldung:
**09.11.83 Patentblatt 83/45**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**Patent Abstracts of Japan, Band 3, Nr. 84, 20. Juli 1979, Seite 135M66**

**Die Akte enthält technische Angaben, die nach dem Eingang der Anmeldung eingereicht wurden und die nicht in dieser Patentschrift enthalten sind.**

(73) Patentinhaber: **INTERATOM Gesellschaft mit beschränkter Haftung, Friedrich- Ebert- Strasse, D-5060 Bergisch Gladbach 1 (DE)**

(72) Erfinder: **Fortmann, Manfred, Dipl.- Ing., Christian- Heesen- Strasse 17, D-5063 Overath (DE)**
Erfinder: **Menzer, Wolfgang, Büchel 6, D-5204 Lohmar 21 (DE)**

(74) Vertreter: **Mehl, Ernst, Dipl.- Ing., Postfach 22 01 76, D-8000 München 22 (DE)**

## Beschreibung

Die vorliegende Erfindung betrifft ein Verfahren und eine Vorrichtung zur Verformungsüberwachung eines Rohrbogens.

In Rohrleitungssystemen aller Art kommt es durch thermische und andere Belastungen zu Dimensionsveränderungen. Diese Dimensionsveränderungen einzelner Rohrleitungsteile belasten insbesondere die Stellen des Rohrleitungssystems, an denen sich die Richtung ändert. Die an solchen Stellen eingesetzten Rohrbögen, im Normalfall mit Richtungsänderungen von 90°, sind daher stark belastet. Insbesondere bei großen Nennweiten der Rohrleitungssysteme kommt es zu erheblichen Verformungen, denen das Material des Rohrbogens gewachsen sein muß.

Insbesondere bei den heißen Kreislaufsystemen einer Kernenergieanlage müssen solche Beanspruchungen berücksichtigt werden. Gerade in den Primärkreisem von Kernreaktoren treten hohe Temperaturen und Temperaturunterschiede auf, so daß die Belastung in den dort verwendeten Rohrbögen besonders groß ist. Die Erfindung beschränkt sich jedoch nicht auf solche Anwendungsfälle, sondern ist auch beispielsweise für Pipelines und Anlagen der Großchemie von Bedeutung.

Wie anhand der Zeichnung und in der übrigen Beschreibung noch genauer erklärt wird, kann ein Rohrbogen in verschiedenen Richtungen beansprucht werden. Zur Erfassung solcher Verformungen ist es bisher bekannt, eine Vielzahl von Dehnungsmeßstreifen auf dem Rohrbogen zu befestigen und aus deren Meßwerten die Verformung des Rohrbogens zu berechnen. Diese Maßnahme ist einerseits sehr aufwendig und andererseits mit verschiedenen Fehlern behaftet. Insbesondere die hohe Temperatur der Rohroberfläche erfordert verschiedene Korrekturen der Meßwerte und einen erheblichen Rechenaufwand. Da aber ein Rohrbogen gewissem Symmetriebedingungen gehorchen muß, sind zu einer näherungsweisen Bestimmung aller für die Verformung wichtigen Daten nur wenige Meßwerte nötig.

In der JP-A-54-62495, von der die vorliegende Erfindung ausgeht, wird daher schon eine Verformungsüberwachung vorgeschlagen, bei der an den Rohrbogenschenkeln starre Streben befestigt sind, die in verschiedene Richtungen — unter anderem auch in Richtung senkrecht zur Krümmungsebene des Rohrbogens — etwa senkrecht abstehen und die Bewegung des Rohrbogens auf Druckaufmehmer übertragem. Diese Vorrichtung benötigt jedoch Bezugspunkte als Gegenlager für die Druckaufnehmer, wodurch die Messung bei einer Lageveränderung des gesamten Rohrbogens ohne Verformung schwierig ist. Außerdem wird die freie Bewegung des Rohrbogens behindert.

Aufgabe der vorliegenden Erfindung ist es ein Verfahren und eine Vorrichtung zur Verformungsüberwachung für einen Rohrbogen anzugeben, welche durch Messung einiger weniger charakteristischer Werte die Erfassung oder Berechnung der gesamten Verformung ermöglichen. Die Verformungsüberwachung soll möglichst wenig aufwendig sein und auch bei Temperaturen von einigen 100° C noch genaue Ergebnisse liefern. Zu berücksichtigen ist ferner, daß der zu überwackende Rohrbogen unter Umständen mit einer Isolierschicht umgeben sein kann, welche das Funktionieren der Verformumgsüberwachung nicht beeinträchtigen soll. Außerdem soll die Vorrichtung die freie Bewegung und Verformung des Rohrbogens nicht behindern, die Verformung aber dennoch genau erfassen.

Zur Lösung dieser Aufgabe wird ein Verfahren nach dem Anspruch 1 vorgeschlagen.

Danach werden an den Rohrbogenschenkeln eines Rohrbogens etwa senkrecht zu seiner Krümmungsebene verlaufende starre Streben auf einer Seite oder auf beiden Seiten befestigt, die die Bewegung der Rohrbogenschenkel übertragen. Diese Streben können gegebenenfalls durch eine Isolierung nach außen geführt werden und ermöglichen so ein Anbringen von Meßinstrumenten im zugänglichen Bereich bei niedrigerer Temperatur. Die Enden der Streben auf je einer Seite des Rohrbogens werden jeweils durch eine Meßvorrichtung miteinander verbunden. Mittels dieser Meßvorrichtung wird der Abstand zwischen den Enden der Streben gemessen. Ferner wird der Winkel zwischen der Mittellinie einer Strebe und der Mittellinie der Meßvorrichtung bestimmt. Bei der bevorzugten Ausführung der Erfindung mit Meßvorrichtungen auf beiden Seiten des Rohrbogens können somit vier Meßwerte gewonnen werden: zwei Längen und zwei Winkel. Diese Werte enthalten alle wichtigen Informationen über den Verformungszustand des Rohrbogens und können direkt aufgezeichnet oder in andere gewünschte Größen umgerechnet werden.

In Anspruch 2 wird eine entsprechende Vorrichtung zur Durchführung des Verfahrens vorgeschlagen.

Dabei sind an beiden Rohrbogenschenkeln etwa senkrecht zur Krümmungsebene des Rohrbogens auf einer Seite oder auf beiden Seiten starre Streben befestigt, die die Bewegung der Rohrbogenschenkel übertragen. Die Enden der Streben auf je einer Seite des Rohrbogens sind miteinander durch eine gelenkig befestigte Meßvorrichtung mechanisch verbunden. Die Meßvorrichtung enthält einen Wegaufnehmer, mit dem der Abstand der Enden der Streben voneinander bestimmbar ist und einen Winkelmesser, mit dem der Winkel zwischen der Mittellinie einer Strebe und der Mittellinie der Meßvorrichtung bestimmbar ist. Die so aufgebaute Vorrichtung benötigt keine Bezugspunkte außerhalb des zu überwachenden Rohrbogens und behindert dessen Bewegungen nicht. Dabei ist von besonderem Vorteil, daß in der höchstbelasteten Zone, der Rohrbogenkrone, keine Befestigungen mehr vorhanden sein müssen. Wegen der verschiedenen Bewegungsmöglichkeiten des Rohrbogens ist eine Aufhängung der Meßvorrichtung in Kugelgelenken notwendig, um ein Knicken oder Biegen zu vermeiden. Bei der bevorzugten Meßanordnung mit Meßvorrichtungen auf beiden Seiten des Rohrbogens und bekannter Länge der Streben genügt die Messung der oben genannten Winkel und Längen zur Bestimmung des Systems. Es lassen sich aus den Meßwerten eindeutige Aussagen über den Verformungszustand des Rohrbogens ableiten. Im Prinzip eignen sich die Meßwerte auch direkt zu einer Interpretation ohne Umrechnung, da für manche Anwendungsfälle nur die Häufigkeit auftretender Verformungen und deren relative Größe zu Vergleichszwecken herangezogen werden muß. Ansonsten können, beispielsweise mittels eines Prozeßrechners, Änderungen der Krümmumgsebene des Rohrbogens und Änderungen seines Krümmungswinkels aus den Meßwerten bestimmt werden.

Im Anspruch 3 wird eine Möglichkeit der Befestigung der Streben an dem Rohrbogen vorgeschlagen. Danach werden die Streben mittels mehrerer kleiner Stifte an die Rohrschenkel angeschweißt. Der Vorteil dieser Ausführung ist, daß die Befestigung am Rohr dehnungsweich ist, so daß das Rohr an dieser Stelle nicht besonders beansprucht wird, daß aber andererseits die Bewegung des Schenkels starr nach außen übertragen wird. Auch bei hoch beanspruchten Reaktorrohrleitungen sind Befestigungen mittels solcher Stifte, welche nur eine ganz dünne Oberflächenschicht des Rohrbogens betreffen, zugelassen.

Im Anspruch 4 wird eine mögliche Ausführungsform der Meßvorrichtung beschrieben. Diese ist danach wie ein zweiteiliger Teleskoparm aufgebaut, wobei in dem äußeren Teleskoprohr ein handelsüblicher Wegaufnehmer untergebracht ist, der die Verschiebung der zwei Teleskoprohre gegeneinander mißt. Ein solcher Wegaufnehmer kann beispielsweise auf kapazitiver Basis arbeiten. Dieser zweiteilige Teleskoparm sollte aus einem Material bestehen, welches einen möglichst geringen thermischen Ausdehnungskoeffizienten hat, bzw. es ist eine Korrektur der thermischen Dehnung vorzusehen, welche jedoch nach Messung der Umgebungstemperatur problemlos möglich wäre. Dies ist nötig, damit Temperaturschwankungen im Bereich der Meßvorrichtung nicht als Verformung des Rohrbogens interpretiert werden. Die thermische Ausdehnung des Rohrbogens kann aus den Messungen eliminiert werden, da Ausdehnungskoeffizient und Temperatur des Rohrbogens bekannt bzw. leicht bestimmbar sind.

Im Anspruch 5 wird eine besondere Ausgestaltung vorgeschlagen, welche eine elektrische und auch thermische Isolation der Meßvorrichtung vom Rohrbogen ermöglicht. Dazu wird die Meßvorrichtung durch Keramikplatten von den Streben isoliert. Sowohl die elektrische als auch die thermische Isolierung vereinfachen den Meßvorgang und die Korrekturen der Meßwerte, da z. B. keine Erdungsprobleme oder Fehlströme auftreten.

Ein Ausführungsbeispiel der Erfindung ist in der Zeichnung dargestellt und zwar zeigen

Fig. 1 einen Rohrbogen mit beidseitig angebrachter Meßvorrichtung,

Fig. 2 eine Seitenansicht der Befestigung der Streben,

Fig. 3 einen Querschnitt durch eine Strebe im Bereich der Befestigungsstifte,

Fig. 4 einen Längsschnitt durch eine Meßvorrichtung und

Fig. 5 einen Schnitt entlang der Linie V-V durch Fig. 4 von der Strebe aus gesehen.

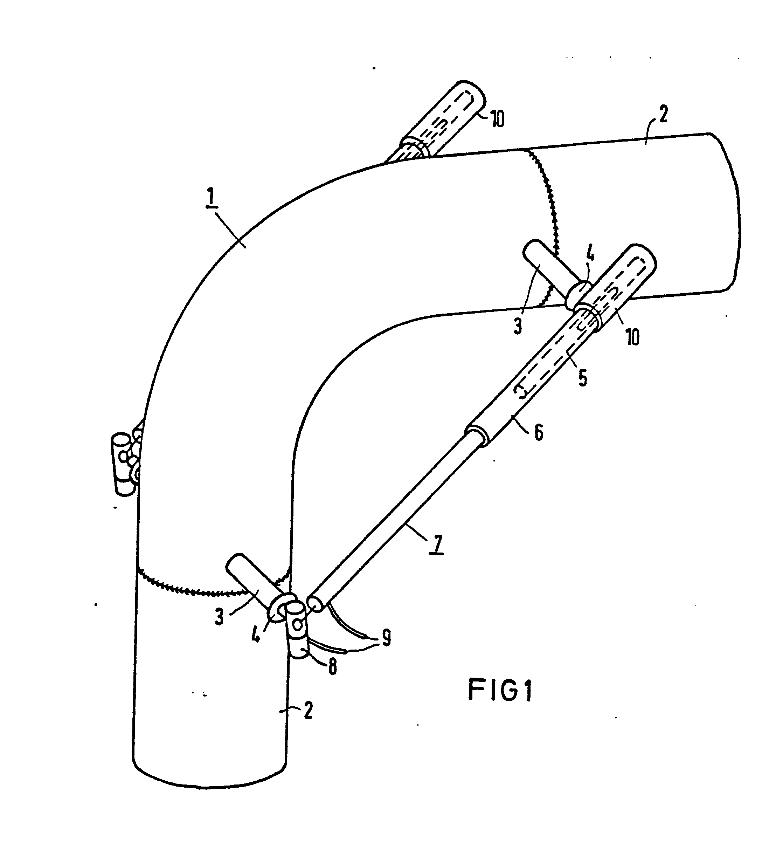

In Fig. 1 ist in perspektivischer Darstellung ein Rohrbogen mit auf beiden Seiten angebrachten Meßvorrichtungen gezeigt. Der Rohrbogen 1 ist zwischen zwei zum übrigen System gehörenden Leitungen 2 eingeschweißt. Durch das übrige System werden Kräfte auf den Rohrbogen ausgeübt, welche ihn verformen können. Zur Messung dieser Verformungen sind an beiden Schenkeln des Rohrbogens 1 Streben 3 befestigt. Diese Streben übertragen die Bewegung des Rohrbogens starr nach außen und gegebenenfalls durch eine Isolierung hindurch. An den Enden 4 der Streben 3 sind mit Kugelgelenken Meßvorrichtungen 7 befestigt. Auf jeder Seite des Rohrbogens befindet sich eine Meßvorrichtung 7. Die Meßvorrichtung besteht aus einen zweiteiligen Teleskoparm, wobei in dem äußeren Teleskoprohr 6 ein Wegmesser 5 eingebaut ist. Dieser Wegmesser kann vorteilhafterweise ein kapazitiver Wegmesser sein.

Ein Ende der Meßvorrichtung ist über einen, z.B. ebenfalls kapazitiven, Winkelmesser 8 an seiner zugehörigen Strebe 3 befestigt. Die Zuleitungen 9 zu Winkelmesser 8 und Wegaufnehmer 5 werden nah beieinander durch geeignete Öffnungen aus dem Teleskoprohr und dem Winkelmessergehäuse herausgeführt. Eine Abdeckkappe 10 schützt den Wegaufnehmer 5.

Zur Erläuterung der Möglichkeiten, die diese einfache Meßvorrichtung zur Bestimmung der Verformungsdaten bietet, seien einige Fälle der Verformung beschrieben:

Für den Fall, daß sich die Krümmungsebene des Rohrbogens nicht ändert, kann sich sein Winkel vergrößern oder verkleinern. Beim Auseinanderziehen des Rohrbogens vergrößert sich der Winkel und beide Wegaufnehmer zeigen eine (gleiche) Längenveränderung des Teleskoparmes an. Unverändert bleiben aber die Meßwerte der beiden Winkelmesser (keine Winkeländerung zwischen Strebe und Meßvorrichtung). Diese einfache Art der Verformung könnte aus einer Meßvorrichtung allein bestimmt werden. Das gleiche gilt für ein Zusammendrücken des Rohrbogens ohne Veränderung der Krümmungsebene. Bei solchen Verformungen ändert sich im Krümmungsbogen der eigentlich runde Querschnitt des Rohrbogens in eine näherungsweise ovale Form. Mit Hilfe von Modellrechnungen können die Ausdehnungen und Belastungen an jeder Stelle des Rohrbogens bestimmt werden.

Schwieriger wird die Bestimmung der Verformung, wenn sich die Krümmungsebene des Rohrbogens ändert. In diesen Falle zeigen beide Wegaufnehmer und beide Winkelmesser verschiedene Werte an, und die Verformungsgrößen müssen aus allen vier Meßwerten abgeleitet werden. Dabei geht die Länge der Streben ein, und es sind relativ komplizierte Koordinatentransformationen nötig, welche jedoch mit einem Prozeßrechner problemlos zu bewältigen sind. Im Prinzip liefern aber auch schon die Differenz der Meßwerte der beiden Wegaufnehmer oder Winkelmesser und deren Absolutwerte signifikante und vergleichbare Daten.

Eine weitere komplizierte Möglichkeit der Verformung des Rohrbogens ist eine Verdrehung der Schenkel gegenüber der Ausgangslage. Auch dies hat Längen und Winkeländerungen auf beiden Seiten zur Folge, wobei unter der Voraussetzung einer symmetrischen Anordnung der Streben die Wegänderungen gleich und die Winkeländerungen gegensinnig sind. Auch in diesem Falle lassen sich aus den Meßwerten oder deren Differenzen schon signifikante Daten gewinnen oder, wie oben angesprochen, mit einem Prozeßrechner unter Zuhilfenahme einer Modellrechnung die Belastungen an einzelnen Stellen des Rohrbogens berechnen. Im Normalfall werden beim Betrieb eines Kernreaktors Kombinationen aller hier beschriebenen Verformungen auftreten, was eine Zuhilfenahme eines Prozeßrechners vernünftig erscheinen läßt. Allerdings braucht die Auswertung der Meßdaten nicht on-line zu erfolgen, sondern kann nach Aufzeichnung der Meßwerte nachträglich durchgeführt werden. Solche Berechnungen können dazu dienen, daß die Richtigkeit der angenommenen Belastungen für einen Rohrbogen und die davon abhängende theoretische Lebensdauer des Rohrbogens nachgeprüft werden.

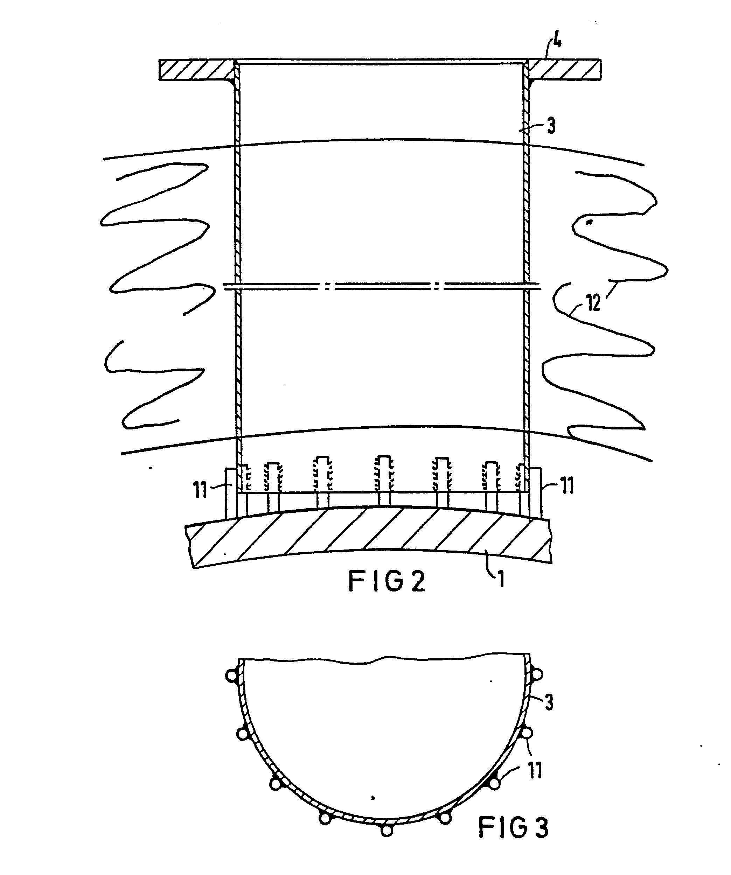

In Fig. 2 und 3 wird die Befestigung der Streben am Rohrbogen dargestellt. Jede Strebe 3 ist mit Hilfe von mehreren kleinen Stiften 11 an dem Rohrbogen festgeschweißt. Auf diese Weise kann die Krümmung des Rohres ohne komplizierte Formanpassung der Strebe ausgeglichen werden, und es ist keine tiefgehende Schweissung an dem empfindlichen Rohrbogen nötig. Außerdem ist die Befestigung mit Hilfe der Stifte 11 weich für thermische Ausdehnungen des Rohrbogens 1 aber starr für eine Übertragung der Gesamtbewegung. In Fig. 2 ist auch eine möglicherweise den Rohrbogen 1 umgebende Isolierung 12 dargestellt, durch welche die Strebe 3 nach außen führt, wo sie dann in einem Flansch 4 endet.

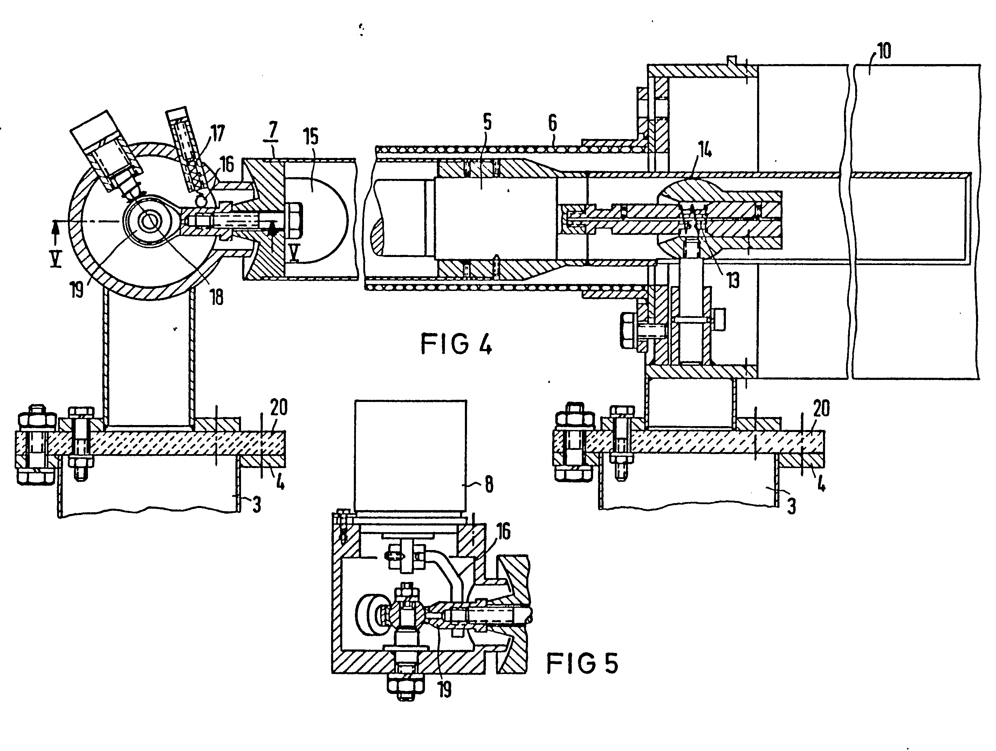

In Fig. 4 und 5 ist ein Ausführungsbeispiel der Meßvorrichtung dargestellt, wobei die einzelnen Meßwertaufnehmer handelsübliche Teile sind, deren Einbindung in das System dargestellt wird. Zwischen den zwei am Rohrbogen befestigten Streben 3 ist auf Flanschen 4, isoliert durch eine Keramikplatte 20 eine Meßvorrichtung 7 montiert. Diese Meßvorrichtung besteht aus einem äußeren 6 und einem inneren Teleskoprohr. Im Inneren der Teleskoprohre befindet sich ein Wegaufnehmer 5, der die Verschiebung der beiden Teleskoprohre gegeneinander aufnimmt. Eine axialspielfreie Halterung 13 mit Seitenspiel führt den Meßstößel des Wegmeßgebers entsprechend der Bewegung der beiden Teleskoprohre gegeneinander. Eine Pendel-Längsführung 14 sorgt dafür, daß die Bewegungsmöglichkeiten der Meßvorrichtung nicht eingeschränkt sind. Die Meßvorrichtung soll sich ja wie in einem Kugelgelenk bewegen können, wobei lediglich die Längenänderung spielfrei mit dem Wegaufnehmer 5 erfaßt werden soll. Eine Schutzhaube 10 umschließt das eine Ende des Meßvorrichtung. Die Meßleitungen des Wegaufnehmers 5 werden über das kleinere Teleskoprohr durch eine Öffnung 15 nach außen verlegt. An anderen Ende der Meßvorrichtung 7 ist ein Winkelmesser 8 angeordnet, welcher den Winkel der Meßvorrichtung 7 in Bezug auf die Strebe mißt. Dazu ist die Meßvorrichtung 7 in einem Kugelgelenk 19 welches mit einer Anpreßfeder 18 zur Spielunterdrückung versehen ist, gelagert. Über einen Mitnehmerstift 16 wird die Bewegung der Meßvorrichtung in Bezug auf die Strebe auf einen Winkelmesser 8 übertragen. Eine Feder 17 preßt den Mitnehmerstift gegen die Meßstelle, so daß eine spielfreie Übertragung der Bewegung möglich ist. Die spielfreie Aufzeichnung der Meßwerte ist besonders vorteilhaft, da durch hysteresefreie Messung eine große Genauigkeit für die Dehnungsermittlung erreicht werden kann. Die hier beschriebene Anordnung stellt ein Ausführungsbeispiel der Meßvorrichtung dar, welche sich im Prinzip aus handelsüblichen Bauteilen aufbauen läßt. Mit handelsüblichen Meßaufnehmern lassen sich Genauigkeiten von 0,05 % bei einer Stabilität von 0,02 % über zwei Jahre erreichen; dies in einen Temperaturbereich von 0 - 100° C und hoher Strahlenbelastung.

**Patentansprüche**

1. Verfahren zur Verformungsüberwachung eines Rohrbogens (1), bei dem die Bewegungen des Rohrbogens (1) durch seitlich an dem Rohrbogen (1) befestigte starre Streben (3) auf Meßvorrichtungen (7) übertragen und die Meßwerte dieser Meßvorrichtungen (7) aufgezeichnet werden,
<u>gekennzeichnet durch</u>
folgende Merkmale:
a) Die Verformung des Rohrbogens (1), bei dem auf einer Seite oder auf beiden durch seine Krümmungsebene getrennten Seiten an jedem seiner Schenkel je eine starre Strebe (3) etwa senkreckt zur Krümmungsebene abstehend befestigt ist, wird durch diese Streben (3) übertragen.

b) Mittels der Meßvorrichtung (7) bzw. der Meßvorrichtungen (7), von denen jede jeweils die beiden auf derselben Seite des Rohrbogens (1) befestigten starren Streben (3) verbindet, wird der Abstand der Enden (4) der Streben (3) auf einer Seite bzw. auf beiden Seiten des Rohrbogens (1) gemessen.

c) Auf einer Seite bzw. auf beiden Seiten wird ferner der Winkel zwischen der Mittellinie einer Strebe (3) und der Verbindungslinie der Enden (4) der durch die Meßvorrichtung (7) verbundenen Streben (3) gemessen.

2. Vorrichtung zur Durchführung des Verfahrens nach Anspruch 1, bei der seitlich an dem Rohrbogen (1) befestigte starre Streben (3) die Bewegung des Rohrbogens (1) auf eine Meßvorrichtung (7) oder auf zwei Meßvorrichtungen (7) übertragen und die Meßwerte dieser Meßvorrichtung(en) aufgezeichnet werden,
gekennzeichnet durch
folgende Merkmale:

a) Auf einer Seite oder auf beiden durch seine Krümmungsebene getrennten Seiten des Rohrbogens (1) ist an jedem seiner Schenkel je eine starre Strebe (3) etwa senkrecht zur Krümmungsebene abstehend befestigt.

b) Die Enden (4) der beiden auf derselben Seite des Rohrbogens (1) befestigten starren Streben (3) sind jeweils miteinander durch eine gelenkig befestigte Meßvorrichtung (7) mechanisch verbunden.

c) Die Meßvorrichtung (7) enthält einen Wegaufnehmer (5), mit dem der Abstand der Enden (4) der Streben (3) voneinander bestimmbar ist.

d) Die Meßvorrichtung (7) enthält zusätzlich einen Winkelmesser (8), mit den der Winkel zwischen der Mittellinie einer Strebe (3) und der Mittellinie der Meßvorrichtung (7) bestimmbar ist.

3. Vorrichtung nach Anspruch 2,
dadurch gekennzeichnet,
daß die Streben (3) mittels mehrerer Stifte (11) an die Rohrbogenschenkel angeschweißt sind.

4. Vorrichtung nach Anspruch 2 oder 3,
dadurch gekennzeichnet,
daß die Meßvorrichtung (7) als zweiteiliger Teleskoparm aufgebaut ist, wobei in dem äußeren Teleskoprohr (6) der Wegaufnehmer (5) untergebracht ist, der die Verschiebung der zwei Teleskoprohre gegeneinander mißt.

5. Vorrichtung nach Anspruch 2, 3 oder 4,
dadurch gekennzeichnet,
daß die Meßvorrichtung (7) durch Keramikplatten (20) von den Streben (3) isoliert ist.

**Claims**

1. A method of monitoring the deformation of a pipe bend (1), in which the movements of the pipe bend (1) are transferred to measuring devices (7) by means of rigid struts (3) which are laterally secured to the pipe bend (1) and the measured values of said measuring devices (7) are recorded, characterised by the following features:

a) the deformation of the pipe bend (1), at which on one side, or on both sides separated by its plane of curvature, a respective rigid strut (3) secured to each of its flanks so as to project approximately normal to the plane of curvature, is transferred by said struts (3);

b) the distance between the ends (4) of the struts (3) on one or both sides of the pipe bend (1) is measured by means of the measuring device (7) or measuring devices (7), each of which connects the two rigid struts (3) secured to the same side of the pipe bend (1);

c) on one or both sides, the angle between the central line of a strut (3) and the connecting line of the ends (4) of the struts (3) which are connected by the measuring device (7), is further measured.

2. Apparatus for carrying out the method as claimed in Claim 1, in which the rigid struts (3), which are laterally secured to the pipe bend (1), transfer the movement of the pipe bend (1) to a measuring device (7) or to two measuring devices (7) and the measured values of said measuring device(s) are recorded, characterised by the following features:

a) on one side, or on both sides of the pipe bend (1) which are separated by its plane of curvature, a rigid strut (3) is secured to each of its flanks so as to project approximately normal to the plane of curvature;

b) the ends (4) of the two rigid struts (3) which are secured on the same side of the pipe bend (1), are in each case mechanically connected to one another through an articulated measuring device (7);

c) the measuring device (7) comprises a displacement receiver (5), by means of which the distance of the ends (4) of the struts (3) from one another can be determined;

d) the measuring device (7) additionally comprises an angle gauge (8), by means of which the angle between the central line of a strut (3) and the central line of the measuring device (7) can be determined.

3. Apparatus as claimed in Claim 2, characterised in that the struts (3) are welded to the flanks of the pipe bend by means of a plurality of pins (11).

4. Apparatus as claimed in Claim 2 or Claim 3, characterised in that the measuring device (7) is formed as a two-part telescopic arm, the displacement receiver (5) which measures the displacement of the two telescopic pipes relative to one another, being accommodated in the outer telescopic pipe (6).

5. Apparatus as claimed in Claim 2, 3 or 4, <u>characterised in</u> that the measuring device (7) is insulated from the struts (3) by ceramic plates (20).

**Revendications**

1. Procédé pour contrôler la déformation d'un coude de tube (1), selon lequel les déplacements du coude de tube (1) sont transmis par l'intermédiaire de bras rigides (3) fixés au coude de tube (1) à des dispositifs de mesure (7) et les valeurs de mesure de ces dispositifs de mesure (7) sont affichées, caractérisé par les caractéristiques suivantes:

a) la déformation du coude de tube (1), auquel un bras rigide (3) est fixé respectivement de manière à faire saillie approximativement perpendiculairement au plan de courbure du coude, sur un côté ou sur les deux côtés séparés par ce plan de courbure, au niveau de chacune des branches du coude, est transmise par ces bras (3),

b) la distance entre les extrémités (4) du bras (3) sur un côté ou sur les deux côtés du coude de tube (1) est mesurée à l'aide du dispositif de mesure (7) ou des dispositifs de mesure (7), dont chacun est relié respectivement aux deux bras rigides (3) fixés sur la même côté du coude de tube (1),

c) en outre l'angle entre l'axe central d'un bras (3) et la ligne de jonction des extrémités (4) des bras (3) reliés par le dispositif de mesure (7), est mesuré sur un côté ou sur les deux côtés.

2. Dispositif pour la mise en oeuvre du procédé suivant la revendication 1, dans lequel des bras rigides (3) fixés latéralement sur le coude tubulaire (1) transmettent le déplacement de ce coude (1) à un dispositif de mesure (7) ou à deux dispositifs de mesure (7), et les valeurs de ce ou ces dispositifs de mesure sont affichées, rémarquable par les caractéristiques suivantes.

a) sur un côté ou sur les deux côtés du coude de tube séparés par le plan de courbure de ce coude, un bras rigide respectif (3) est fixé au niveau de chacune des branches du coude de manière à faire saillie approximativement perpendiculairement au plan de courbure;

b) les extrémités (4) des deux bras rigides (3) fixés sur le même côté du coude de tube (1) sont reliées mécaniquement entre elles par l'intermédiaire d'un dispositif de mesure (7) fixé par articulations;

c) le dispositif de mesure (7) contient un capteur de déplacement (5), à l'aide duquel la distance entre les extrémités (4) des bras (3) peut être déterminée;

d) le dispositif de mesure (7) comporte en outre un dispositif de mesure angulaire (8) à l'aide duquel l'angle entre l'axe central d'un bras (3) et l'axe central du dispositif de mesure (7) peut être déterminé.

3. Dispositif suivant la revendication 2, caractérisé par le fait que les bras (3) sont soudés, au moyen de plusieurs tiges (11) sur les branches du coude de tube.

4. Dispositif suivant la revendication 2 ou 3, caractérisé par le fait que le dispositif de mesure (7) est réalisé sous la forme d'un bras télescopique à deux éléments, dans le tube télescopique extérieur (6) duquel se trouve logé le capteur de déplacement (5) qui mesure le déplacement relatif entre les deux tubes télescopiques.

5. Dispositif suivant la revendication 2, 3 ou 4, caractérisé par le fait que le dispositif de mesure (7) est isolé des bras (3) par des plaques céramiques (20).

FIG 1

FIG 2

FIG 3

FIG 4

FIG 5